# FASCICULE DE BREVET EUROPEEN

(11) **EP 3 206 943 B1**
(45) Date de publication et mention de la délivrance du brevet: **28.11.2018**
(21) Numéro de dépôt: 15777713.7
(22) Date de dépôt: 13.10.2015
(51) Int. Cl.: B63B 21/66, B63G 8/39, G01V 1/38, G10K 9/12, H01Q 1/34

(54) **ACCROCHAGE D'UN POISSON DANS UN SONAR REMORQUE**
FESTHAKEN EINES FISCHES AN EIN GESCHLEPPTES SONAR
HITCHING A FISH UP TO A TOWED SONAR

(30) Priorité: 14.10.2014 FR 1402310
(43) Date de publication de la demande: 23.08.2017
(73) Titulaire: Thales, 92400 Courbevoie (FR)
(72) Inventeur: PEDEN, Benoît, F-29200 Brest (FR); CADALEN, François, F-29200 Brest (FR); LONGUET, Jean-Philippe, F-29200 Brest (FR); BODILIS, Mathieu, F-29200 Brest (FR); HOFMANN, Pierre, F-29200 Brest (FR)
(74) Mandataire: Collet, Alain
(86) Numéro de dépôt international: PCT/EP2015/073686
(87) Numéro de publication internationale: WO 2016/059056

(56) Documents cités:
- EP-A1- 1 373 933
- EP-A1- 2 076 426
- WO-A1-2014/093975

## Description

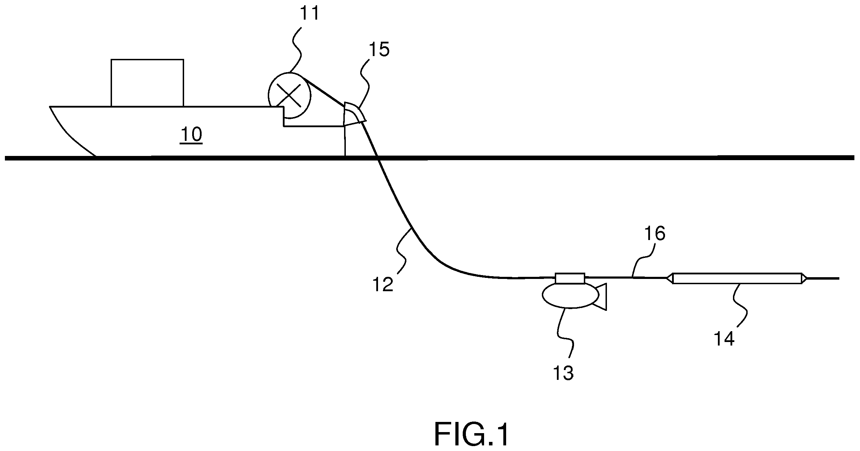

L'invention concerne un sonar actif remorqué comprenant une antenne d'émission intégrée dans un objet submersible, aussi dénommé poisson, et une antenne de réception par exemple linéaire, aussi dénommée flûte. Lors de l'utilisation du sonar en remorquage dépendant, le poisson et la flûte sont reliés successivement à un même câble de traction. La figure 1 illustre une configuration connue d'un sonar actif en remorquage dépendant. Le pont du navire 10 est équipé d'un dispositif de remorquage comprenant un treuil motorisé 11 capable de tracter, au travers d'un chaumard 15, un câble 12 (souvent appelé câble lourd) auquel sont reliés d'une part un poisson 13 et d'autre part une flûte 14. Un câble de traction léger 16 peut être interposé entre le poisson et la flute 14.

La mise à l'eau de cet ensemble est une opération délicate. Généralement, la flute 14 et le câble léger 16 sont dans un premier temps mis à l'eau au moyen d'un treuil annexe (non représenté). Une fois cette première mise à l'eau effectuée, le poisson 13 est raccordé au câble léger 16 et le câble principal 12 est à son tour raccordé au poisson 13. Les raccordements assurent une connexion mécanique et électrique des différents sous ensembles. Une fois ces raccordements effectués, la suite de la mise à l'eau peut être effectuée au moyen du treuil 11 pour obtenir la configuration représentée en figure 1. La récupération de l'ensemble se fait en inversant les opérations de mise à l'eau.

Ce mode opératoire présente plusieurs défauts.

La continuité mécanique et électrique entre le câble 12 et la flute 14 se fait au travers du poisson. Si on souhaite faire fonctionner le sonar en mode passif, c'est-à-dire sans émission acoustique de la part du poisson, on est tout même obligé de mettre à l'eau le poisson 13. Il est en effet impossible de raccorder la flute 14 au câble principal 12 éventuellement par l'intermédiaire du câble léger 16 sans passer par l'intermédiaire du poisson 13.

Les raccordements mécaniques et électriques se font dans un environnement hostile, risque de corrosion du à l'environnement marin et exposition longue à la houle du personnel réalisant la manutention.

En cas de casse de certains éléments de manutention, comme par exemple le treuil annexe, il y a un risque de perte de la flute 14, voire du poisson 13.

L'invention vise à pallier tout ou partie des problèmes cités plus haut en supprimant le besoin d'un treuil annexe et en proposant un système sonar dans lequel les connexions mécaniques sont préétablies et dans lequel le montage du poisson est optionnel.

Le document EP 2 076 426 A1 décrit un sonar actif remorqué dans lequel un poisson est raccordé à un câble de remorquage indépendamment d'une flute. L'invention propose de simplifier ce montage.

A cet effet, l'invention a pour objet un sonar actif remorqué comprenant une antenne d'émission intégrée dans un objet submersible, appelé poisson, une antenne de réception submersible appelée flûte et un câble de remorquage destiné à tracter le poisson et la flute, caractérisé en ce que le câble de remorquage comprend une terminaison raccordée mécaniquement et électriquement à la flute et en ce que la terminaison comprend des moyens de raccordement mécanique et électrique amovibles du poisson au câble de remorquage, indépendant du raccordement de la flute.

La terminaison comprend plusieurs vertèbres articulées entre elles en série, les vertèbres possédant une surface extérieure sensiblement cylindrique s'étendant selon un axe X principal du câble de remorquage lorsque le câble de remorquage est tendu.

Une première et une seconde des vertèbres peuvent être destinées à coopérer chacune avec une fourche du poisson afin d'assurer le raccordement mécanique du poisson sur la terminaison.

Une troisième des vertèbres peut comprendre au moins une embase électrique permettant de raccorder le poisson au câble de remorquage. Le poisson comprend alors un bras se terminant par une des fourches. Un câble électrique permettant le raccordement électrique du poisson s'étend à l'intérieur du bras. Le câble électrique comprend un tronçon libre s'étendant à l'extérieur du bras et terminé par une fiche destinée à être raccordée sur l'embase.

Les vertèbres dites vertèbres courantes situées entre la première vertèbre et la troisième vertèbre comprennent avantageusement une rainure orientée selon l'axe X et réalisée à l'intérieure de la surface extérieure cylindrique des vertèbres courantes considérées. La rainure est destinée à contenir le tronçon libre du câble électrique.

Le sonar peut comprendre une rallonge électrique amovible disposée entre la fiche formant l'extrémité du câble électrique et l'embase. La rallonge électrique est disposée à l'intérieure de la surface extérieure cylindrique de la troisième vertèbre.

La fourche comprend avantageusement deux dents. La première et la seconde vertèbre comprennent des rainures, les dents pouvant s'insérer chacune dans une des rainures.

Avantageusement, les rainures traversent la vertèbre considérée selon un axe vertical Z perpendiculaire à l'axe X.

Les rainures peuvent présenter un chanfrein d'entrée permettant de faciliter l'insertion de la fourche sur la vertèbre considérée.

La fourche peut être articulée par rapport au poisson de façon à permettre une rotation de la fourche autour d'un axe horizontal Y perpendiculaire à l'axe X.

La fourche peut présenter une forme s'incurvant perpendiculairement à l'axe Y.

La forme de la fourche est avantageusement incurvée de façon à ce qu'une partie concave de la forme incurvée vienne en appui sur un premier flanc de la rainure correspondante et à ce qu'une extrémité libre de chacune des dents vienne en appui contre un second flanc de la rainure correspondante, opposé au premier flanc.

La première et la seconde vertèbres ainsi que les fourches sont avantageusement percées de façon à permettre le passage d'un axe permettant de verrouiller la position de la fourche sur la vertèbre correspondante.

Le sonar peut comprendre une goupille permettant d'empêcher le désengagement de l'axe de verrouillage de la fourche.

Le raccordement mécanique peut assurer le positionnement du poisson par rapport à la terminaison, son maintien en position et la reprise des efforts exercés par le poisson sur la terminaison.

L'invention sera mieux comprise et d'autres avantages apparaîtront à la lecture de la description détaillée d'un mode de réalisation donné à titre d'exemple, description illustrée par le dessin joint dans lequel :
la figure 1, déjà présentée, illustre la structure générale d'un sonar actif remorqué ;
la figure 2 représente un premier mode de réalisation de l'accrochage d'un poisson sur un câble tracteur ;
la figure 3 représente plus en détail la connexion du poisson sur une terminaison formant une extrémité du câble tracteur ;
la figure 4 représente la terminaison seule sans le poisson ;
les figures 5a et 5b représentent deux demi vertèbres de la terminaison, équipées de moyens de maintien d'un câble électrique provenant du poisson ;
les figures 6a, 6b, 6c et 6d représentent, pour le premier mode de réalisation, un exemple de maintien mécanique du poisson sur la terminaison ;
la figure 7 représente un second mode de réalisation de l'accrochage du poisson sur le câble tracteur ;
la figure 8 et 9 représentent plus en détail une partie de la terminaison du second mode de réalisation ;
les figures 10a à 10j représentent, pour le second mode de réalisation, un exemple de maintien mécanique du poisson sur la terminaison.

Par souci de clarté, les mêmes éléments porteront les mêmes repères dans les différentes figures.

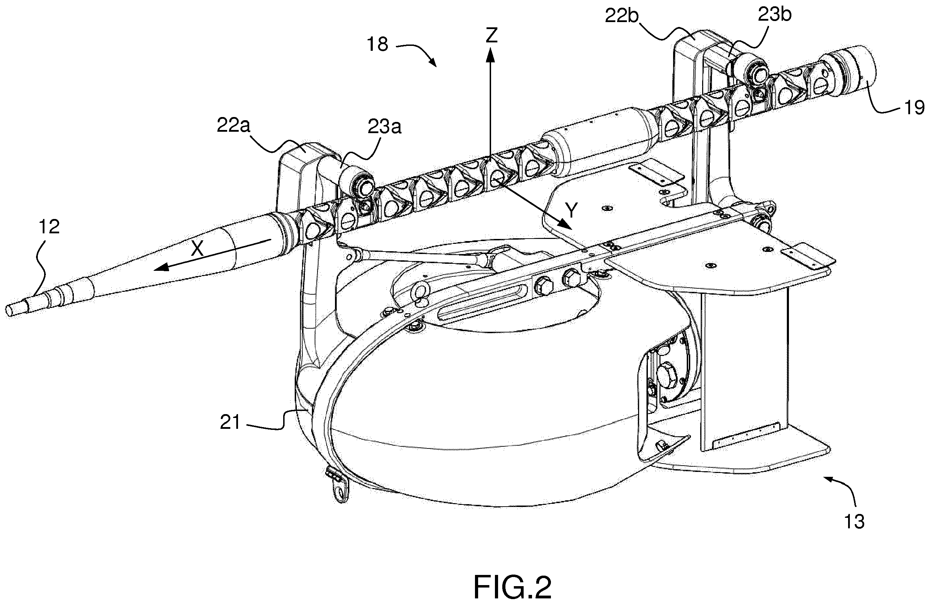

La figure 2 représente une terminaison 18 d'un câble tracteur 12 à la quelle est suspendue un poisson 13 comprenant un corps submersible 21, destiné à recevoir dans sa structure une antenne d'émission d'un sonar actif. A l'extrémité libre 19 de la terminaison peuvent être raccordés la flute 14 directement ou par l'intermédiaire du câble de traction léger 16.

Le poisson 13 est suspendu au câble de traction 12 par l'intermédiaire de deux bras de fixation dissymétriques 22a et 22b permettant un passage latéral des bras de fixation dans le chaumard 15.

Le câble de traction 12 est destiné à remorquer le poisson 13. Le câble 12 s'étend selon un axe de traction X sensiblement horizontal lorsque le poisson 13 est tracté. Le poisson 13 est suspendu par l'effet de son poids au câble 12. On définit un axe Z perpendiculaire à l'axe du câble 12. On définit un dernier axe Y perpendiculaires aux axes X et Z. Les axes X, Y et Z sont définit par rapport au câble 12. Par convention on supposera par la suite que les axes X et Y sont horizontaux et que l'axe Z est vertical. L'horizontalité de l'axe X et la verticalité de l'axe Z ne sont effectives que lorsque le poisson 13 est suspendu par gravité et est stable. L'axe X est l'axe de traction. Dans la pratique, l'axe X peut prendre une direction inclinée qui peut atteindre 40° à 60° lors de la mise à l'eau ou de la récupération du poisson 13. L'axe X peut aussi porter à tribord ou bâbord en giration. L'axe X peut être appelé axe de roulis, l'axe Y : axe de tangage et l'axe Z, axe de lacet.

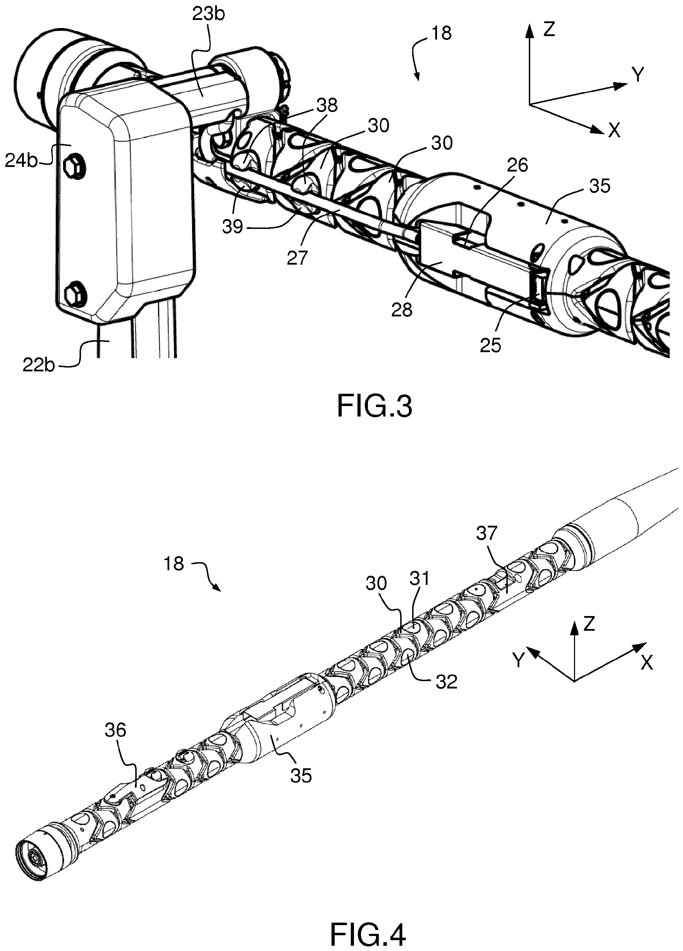

La figure 3 représente plus en détail la connexion du poisson 13 sur la terminaison 18. Plus précisément, on distingue la connexion mécanique au niveau du bras 22b. Le bras s'étend selon l'axe Z depuis le poisson 13. Un doigt 23b est fixé à une extrémité supérieure 24b du bras 22b. Le doigt 23b s'étend selon l'axe Y. Le doigt 23b recouvre la terminaison 18 pour y être fixé. La fixation mécanique sera détaillée plus loin. Le bras 22a est mécaniquement identique au bras 22b.

Le poisson 13 est raccordé électriquement au câble tracteur 12 au moyen d'une embase électrique 25 appartenant à la terminaison 18 et d'une fiche électrique 26 disposée en extrémité d'un câble électrique 27 sortant du poisson 13. Le câble 27 s'étend à l'intérieur du bras 22b et du doigt 23b. Le câble électrique 27 comprend un tronçon libre s'étendant à l'extérieur du doigt 23b et terminé par la fiche 26 destinée à être raccordée sur l'embase 25. Un capot 28 recouvre avantageusement la fiche 26 et l'embase 25 pour les protéger mécaniquement.

La figure 4 représente la terminaison 18 seule sans le poisson 13. La terminaison 18 est formée de plusieurs vertèbres articulées entre elles en série. Une vertèbre courante 30 est articulée à la précédente au moyen d'une liaison pivot 31 permettant une liberté en rotation autour de l'axe Z. La même vertèbre 30 est articulée à la suivante au moyen d'une liaison pivot 32 permettant une liberté en rotation autour de l'axe Y.

Lorsque le câble tracteur 12 est tendu, les différentes vertèbres de la terminaison 18 sont alignées selon l'axe X. Dans cette configuration, la surface extérieur des vertèbres courantes 30 forme une surface sensiblement cylindrique d'axe X afin de limiter au maximum la trainée dans l'eau. Les liaisons pivot 31 et 32 sont comprises à l'intérieure de la surface cylindrique.

La terminaison 18 comprend trois vertèbres particulières. Une vertèbre 35 comprend l'embase 25 permettant de raccorder électriquement le poisson 13 au câble 12. Plus précisément, le câble 12 est formé d'une âme dans laquelle circulent des conducteurs électriques ou éventuellement optiques permettant de véhiculer des signaux et de la puissance entre le treuil 11 et le poisson 13 ainsi qu'entre le treuil 11 et la flute 14. Le câble 12 est recouvert d'une armature assurant sa tenue mécanique. Les conducteurs circulent également dans les vertèbres et ceux prévus pour le raccordement du poisson 13 sortent de la terminaison 18 par l'embase 25. La vertèbre 35 comprend une surface extérieure cylindrique d'axe X. Une fois le raccordement électrique du poisson 13 effectué, l'embase 25, la fiche 26 et le capot 28 ne sont pas proéminents de la surface extérieure cylindrique de la vertèbre 35. Dans cette variante, pour permettre la mise place de l'embase 25, le diamètre extérieur de la surface extérieur de la vertèbre 35 est supérieur au diamètre de la surface cylindrique extérieure des vertèbres courantes 30.

Deux autres vertèbres particulières 36 et 37, avantageusement identiques, permettent d'assurer le raccordement mécanique du poisson 13 sur la terminaison 18. Le raccordement mécanique assure le positionnement du poisson 13 par rapport à la terminaison 18, son maintien en position et la reprise des efforts exercés par le poisson 13 sur la terminaison 18. Parmi les efforts exercés par le poisson 13 sur la terminaison 18, on trouve principalement le poids du poisson, et les efforts hydrodynamiques exercés par l'eau sur le poisson 13 lorsque celui-ci est tracté. On peut avoir successivement, une vertèbre 36, plusieurs vertèbres courantes 30, la vertèbre 35, plusieurs vertèbres courantes 30, la vertèbre 37 et de nouveau plusieurs vertèbres courantes 30 pour former la terminaison 18.

Les vertèbres courantes 30 situées entre la vertèbre 36 sur laquelle est fixé le bras 22b et la vertèbre 35 peuvent comprendre des ergots 38 et 39 permettant de maintenir le câble électrique 27 en position le long de la surface extérieure des vertèbres 30. Il est également possible de prévoir des ergots sur les vertèbres 30 situées entre la vertèbre 35 et la vertèbre 37 afin d'y accueillir un câble électrique provenant du bras 22a. La vertèbre 35 peut être symétrique pour y connecter un câble provenant du bras 22a ou du bras 22b. Il est possible de prévoir un poisson 13 équipé de deux câbles électriques, un transitant par chacun des bras 22a et 22b. A cet effet, la vertèbre 35 comprend deux embases 25, chacune destinée à recevoir un des câbles.

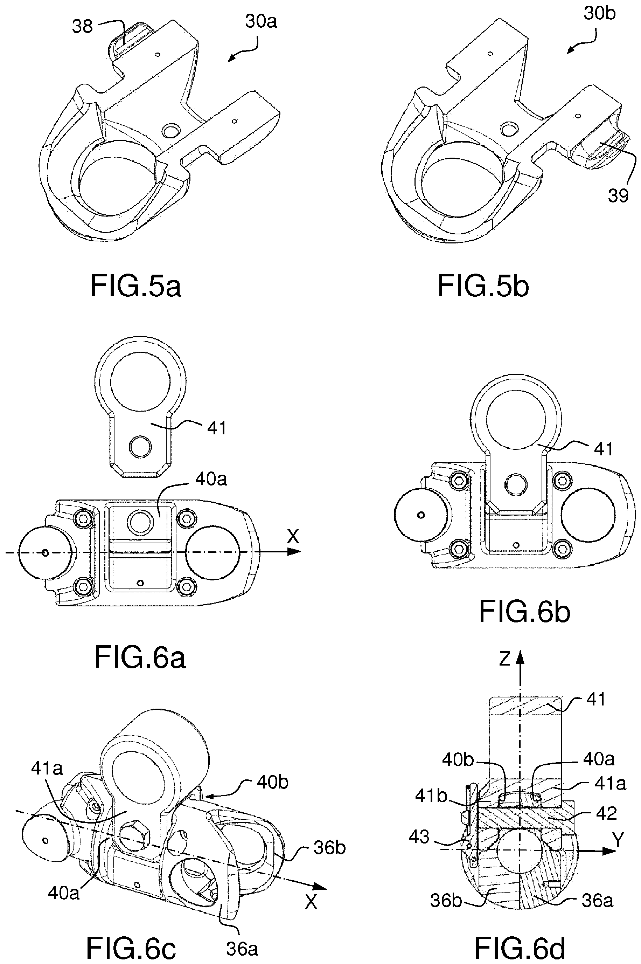

Pour assurer le montage des vertèbres 30 et notamment l'assemblage des liaisons pivots 31 et 32, les vertèbres courantes 30 sont formées de deux demi vertèbres 30a et 30b chacune. Les figures 5a et 5b représentent deux demi vertèbres 30a et 30b équipées chacune d'un ergot, respectivement 38 et 39.

Les figures 6a, 6b, 6c et 6d représentent un exemple de fixation mécanique d'un doigt sur la vertèbre prévue pour le recevoir, en l'occurrence le doigt 23b sur la vertèbre 36. Le doigt 23a se fixe avantageusement sur la vertèbre 37 de la même façon.

La vertèbre 36 est formée de deux demi vertèbres 36a et 36b. Une fois assemblées l'une contre l'autre les deux demi vertèbres possèdent une surface extérieure sensiblement cylindrique d'axe X de même diamètre que celui de la surface extérieure des vertèbres courantes 30.

Chaque demi vertèbre 36a et 36b comprend une rainure, respectivement 40a et 40b, réalisée en creux dans la surface cylindrique extérieure et s'étendant selon l'axe Z. Après assemblage de la vertèbre 36, les deux rainures sont symétriques par rapport à un plan vertical passant par les axes X et Z.

Le doigt 23b se termine par une fourche 41 destinée à coopérer avec les deux rainures 40a et 40b. La fourche 41 comprend deux dents 41a et 41b chacune destinée à pénétrer dans une des rainures, respectivement 40a et 40b. Les dimensions intérieures des rainures 40a et 40b sont sensiblement égales, au jeu fonctionnel près, aux dimensions extérieures des dents 41a et 41b de façon à ce que les dents 41a et 41b coulissent dans les rainures 40a et 40b selon un mouvement de translation selon l'axe Z lors de la connexion mécanique du poisson 13 sur la terminaison 18. Les deux demi vertèbres 36a et 36b ainsi que la fourche 41 sont percées de façon à permettre le passage d'un axe 42 permettant de verrouiller la position de la fourche 41 sur la vertèbre 36. Une goupille 43 peut empêcher le désengagement de l'axe 42.

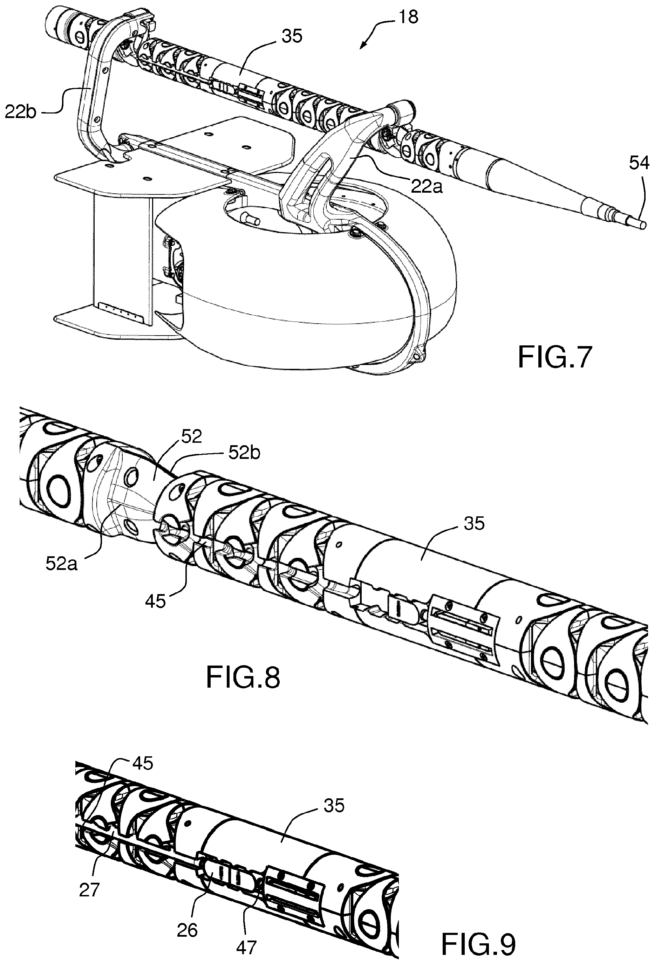

La figure 7 représente un second mode de réalisation de la terminaison 18 dans laquelle toutes les vertèbres ont une surface cylindrique de même diamètre. Plus précisément, dans le mode de réalisation visible sur les figures 3 et 4, la vertèbre 35 possède un diamètre supérieur à celui des autres vertèbres. Ce changement de diamètre génère une trainée supplémentaire dans l'eau lorsque le sonar est tracté. Lors de la mise à l'eau ou lors de la récupération, le changement de diamètre peut aussi générer des à-coups et des chocs, notamment lors du passage de la terminaison 18 dans le chaumard 15. Dans le mode de réalisation de la figure 7, ce changement de diamètre est supprimé.

De plus, dans le mode de réalisation visible sur les figures 3 et 4 les ergots 38 et 39 sont proéminents par rapport à la surface extérieure cylindrique des vertèbres courantes 30. Cette proéminence a été supprimée dans le mode de réalisation de la figure 7 et le tronçon libre du câble électrique 27 est disposé à l'intérieur de la surface extérieure cylindrique des vertèbres courantes 30 depuis sa sortie du doigt 23b jusqu'à la vertèbre 35. A cet effet les vertèbres courantes 30 situées entre les vertèbres 35 et 36 comprennent une rainure 45 orientée selon l'axe X et réalisée à l'intérieure de la surface extérieure cylindrique des vertèbres courantes 30 considérées. La rainure 45 est destinée à contenir le câble électrique 27. La rainure peut pincer légèrement le câble électrique 27 afin qu'il reste dans la rainure 45 lorsque les différentes vertèbres bougent entre elles au niveau de leurs liaisons pivot. A l'intérieur de la rainure 45, le câble électrique 27 peut néanmoins se déplacer selon l'axe X afin d'épouser le mouvement des vertèbres 30 entre elles lorsqu'elles se déplacent l'une par rapport à l'autre au moyen de leurs liaisons pivot. Ce déplacement permet d'éviter une usure prématurée du câble électrique 27 par traction de celui-ci selon l'axe X.

La figure 8 représente plus en détail une partie de la terminaison 18 au niveau de la rainure 45. La figure 9 représente cette même partie avec le raccordement électrique du câble électrique 27 réalisé. Avantageusement, une rallonge électrique 47 amovible est disposée entre la fiche 26 formant l'extrémité du câble électrique 27 et l'embase 25. Le montage et le démontage du poisson 13 de la terminaison 18 se fait électriquement entre la fiche 26 et la rallonge 47. Ainsi, l'embase 25 n'est pas manipulée. La rallonge électrique 47 constitue une pièce d'usure qu'il est possible de remplacer facilement. Cette pièce d'usure limite le risque d'endommager l'embase 25 lors des manipulations du poisson 13. La rallonge électrique 47 est disposée à l'intérieure de la surface extérieure cylindrique de la vertèbre 35.

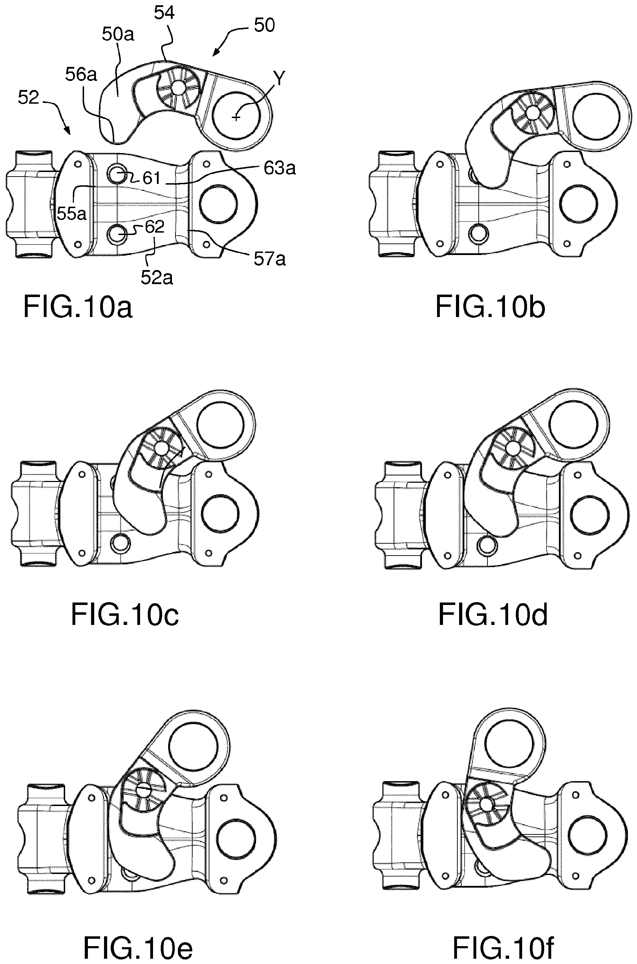

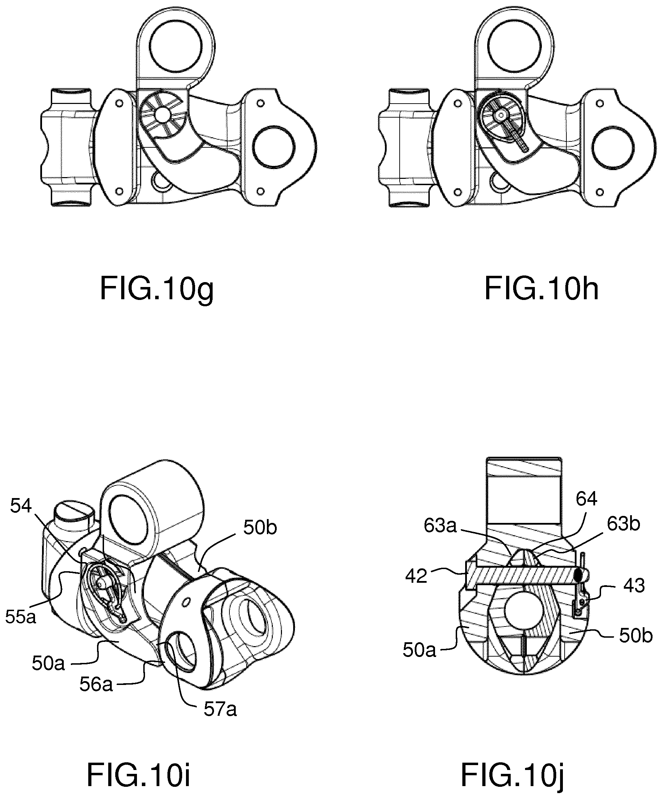

Les figures 10a à 10j représentent, pour le second mode de réalisation, le maintien mécanique du poisson 13 sur la terminaison 18. Les dents 23a et 23b se terminent par des fourches 50 qui diffèrent des fourches 41. Sur les figures 10a à 10j une seule fourche 50 est représentée en regard d'une vertèbre 52 destinée à l'accueillir. Les deux fourches 50 d'une part et d'autre part les deux vertèbres destinées à accueillir les fourches 50 sont avantageusement identiques. La vertèbre 52 diffère de la vertèbre 36 par la forme de ses rainures 52a et 52b dans lesquelles la fourche 50 vient s'insérer.

La fourche 50 est articulée par rapport au doigt 23b de façon à permettre une rotation de la fourche 50 autour d'un axe horizontal Y. Les figures 10a à 10g présentent différentes positions de la fourche 50 par rapport à la vertèbre 52. Cette articulation permet à la fourche 50 de glisser suivant l'axe X sur les différentes vertèbres de la terminaison 18 sans risque d'abimer la fourche 50. Il est possible de prévoir, au cours de la manoeuvre d'accrochage du poisson 13, le maintien du poisson 13, fixe sur le pont du navire 10. Le rapprochement du câble 12 de sa position où le poisson 13 est accroché se fait principalement en manoeuvrant le treuil 11. Dans le premier mode de réalisation il est possible de prévoir une liaison pivot autour de l'axe Y entre la fourche 41 et le doigt qui la porte. Cette liaison pivot possède une faible amplitude et autorise une rotation des dents 41a et 41b afin de faciliter leur insertion dans les rainures correspondantes. Plus précisément dans le second mode de réalisation, lors de la mise en place du poisson 13 terminaison, on peut positionner les bras 22a et 22b sur le câble 12 en amont de la terminaison 18, c'est-à-dire sur une partie 54 du câble 12. Ensuite l'opérateur assurant le montage du poisson 13, manoeuvre le treuil 11 de façon à enrouler le câble 12 pour rapprocher les bras 22a et 22b de leur vertèbre d'accueil respective. Tant que les fourches 50 n'atteignent pas les vertèbres d'accueil, elles restent en position escamotée telle que représentée sur la figure 10a. Lorsque l'opérateur poursuit sa manipulation du treuil 11, les rainures 52a et 52b de la vertèbre 52 viennent en regard de la fourche 50 qui peut tourner librement autour de sa liaison pivot et s'insérer par gravité dans les rainures correspondantes. Alternativement, l'opérateur peut engager manuellement les fourches 50 dans leur vertèbre respective 52. Cette opération fait passer de la position de la figure 10a à celle de la figure 10c.

L'opérateur reprend ensuite la manoeuvre du treuil 11 pour passer de la position de la figure 10c à celle de la figure 10g.

Les rainures 52a et 52b diffèrent des rainures 40a et 40b par leur largeur définie selon l'axe X afin de permettre la rotation de la fourche 50 à l'intérieur des rainures correspondantes.

Afin de faciliter la mise en place de la fourche 50 dans les rainures 52a et 52b, la fourche 50 présente une forme s'incurvant perpendiculairement à l'axe Y. Plus précisément, la fourche 50 comprend deux dents 50a et 50b pouvant s'insérer chacune dans une des rainures, respectivement 52a et 52b. La forme de la fourche 50 est incurvée de façon à ce qu'une partie concave 54 de la forme incurvée vienne en appui sur un des flancs 55a et 55b de la rainure 52a et 52b correspondante. L'extrémité libre 56a et 56b de chacune des dents 50a et 50b vient en appui contre un flanc 57a et 57b de la rainure correspondante, opposé au flanc 55a, 55b.

Dans la position de la figure 10g, les fourches 50 sont en butée sur les vertèbres 52 correspondantes. L'axe 42 et la goupille 43 peuvent alors être utilisées comme précédemment pour verrouiller la position de la fourche 50 sur la vertèbre 52. Après verrouillage, le poisson 13 peut être mis à l'eau en manoeuvrant le treuil 11. Suit ensuite l'utilisation du sonar.

A la fin de la mission, le sonar est remonté sur le pont du navire 10 au moyen du treuil 11. Lorsque le poisson 13, tracté par le câble 12, arrive sur le pont du navire 10, le poisson 13 est immobilisé sur le pont et l'opération de décrochage du poisson peut être engagée.

Le décrochage du poisson 13 de la terminaison 18 se fait en inversant l'ordre des opérations d'accrochage. Plus précisément, le démontage de l'axe 42 se fait dans la position de la figure 10h vers celle de la figure 10g. L'opérateur manoeuvre ensuite le treuil 11 pour déplacer la terminaison 18 par rapport au poisson 13 pour passer de la position de la figure 10g vers la position de la figure 10c. Ensuite l'opérateur relève manuellement la fourche 50 pour écarter les dents 50a et 50b de la vertèbre correspondante. Le câble 12 peut ensuite être éloigné du poisson 13 et poursuivre son enroulement.

Les rainures 52a et 52b peuvent traverser la vertèbre 52 selon l'axe Z. Ainsi la terminaison 18 peut être retournée de 180° autour de l'axe X et accepter néanmoins l'insertion de la fourche 50. Le fait que les rainures sont traversantes peut également s'appliquer au premier mode de réalisation.

Sur les différentes figures 10a à 10j, on distingue deux trous 61 et 62 permettant d'accueillir l'axe 42. Un des deux trous est utilisé en fonction de l'orientation de la terminaison 18 par rapport au poisson 13.

De plus pour faciliter l'insertion de la fourche 50, les rainures 52a et 52b présentent un chanfrein d'entrée, respectivement 63a et 63b. Ce chanfrein permet une tolérance de positionnement en rotation de la terminaison autour de l'axe X par rapport à la fourche 50. Le fond 64 de la fourche 50 peut présenter une forme en creux épousant celle des chanfreins 63a, 63b afin d'immobiliser la fourche 50 en rotation autour de l'axe X lorsque l'insertion de la fourche est complète dans les rainures 52a et 52b. Le chanfrein peut également s'appliquer au premier mode de réalisation.

De plus, lorsque l'insertion de la fourche 50 est complète les dents 50a et 50b sont disposées à l'intérieur de la surface cylindrique extérieure de la vertèbre 52.

## Revendications

1. Sonar actif remorqué comprenant une antenne d'émission intégrée dans un objet submersible, appelé poisson (13), une antenne de réception submersible appelée flûte (14) et un câble de remorquage (12) destiné à tracter le poisson (13) et la flute (14), **caractérisé en ce que** le câble de remorquage (12) comprend une terminaison (18) raccordée mécaniquement et électriquement à la flute (14), **en ce que** la terminaison (18) comprend des moyens de raccordement mécanique et électrique amovibles du poisson (13) au câble de remorquage (12), indépendant du raccordement de la flute (14) et **en ce que** la terminaison (18) comprend plusieurs vertèbres (30, 36, 37 ; 52) articulées entre elles en série, les vertèbres (30, 36, 37 ; 52) possédant une surface extérieure sensiblement cylindrique s'étendant selon un axe X principal du câble de remorquage (12) lorsque le câble de remorquage (12) est tendu.

2. Sonar selon la revendication 1, **caractérisé en ce qu'**une première et une seconde des vertèbres (36, 37 ; 52) sont destinées à coopérer chacune avec une fourche (41 ; 50) du poisson (13) afin d'assurer le raccordement mécanique du poisson (13) sur la terminaison (18).

3. Sonar selon la revendication 2, **caractérisé en ce qu'**une troisième des vertèbres (35) comprend au moins une embase électrique (25) permettant de raccorder le poisson (13) au câble de remorquage (12), **en ce que** le poisson (13) comprend un bras (22b) se terminant par une des fourches (41 ; 50), **en ce qu'**un câble électrique (27) permettant le raccordement électrique du poisson (13) s'étend à l'intérieur du bras (22b) et **en ce que** le câble électrique (27) comprend un tronçon libre s'étendant à l'extérieur du bras (22b) et terminé par une fiche (26) destinée à être raccordée sur l'embase (25).

4. Sonar selon la revendication 3, **caractérisé en ce que** les vertèbres (30) dites vertèbres courantes situées entre la première vertèbre (36 ; 52) et la troisième vertèbre (35) comprennent une rainure (45) orientée selon l'axe X et réalisée à l'intérieure de la surface extérieure cylindrique des vertèbres courantes (30) considérées et **en ce que** la rainure (45) est destinée à contenir le tronçon libre du câble électrique (27).

5. Sonar selon la revendication 4, **caractérisé en ce qu'**il comprend une rallonge électrique (47) amovible disposée entre la fiche (26) formant l'extrémité du câble électrique (27) et l'embase (25) et **en ce que** la rallonge électrique (47) est disposée à l'intérieure de la surface extérieure cylindrique de la troisième vertèbre (35).

6. Sonar selon l'une des revendications 2 à 5, **caractérisé en ce que** la fourche (41 ; 50) comprend deux dents (41a, 41b ; 50a, 50b), **en ce que** la première et la seconde vertèbre (36, 37 ; 52) comprennent des rainures (40a, 40b ; 52a, 52b), les dents (41a, 41b ; 50a, 50b) pouvant s'insérer chacune dans une des rainures (40a, 40b ; 52a, 52b).

7. Sonar selon la revendication 6, **caractérisé en ce que** les rainures (40a, 40b ; 52a, 52b) traversent la vertèbre considérée (36, 37 ; 52) selon un axe vertical Z perpendiculaire à l'axe X.

8. Sonar selon l'une des revendications 6 ou 7, **caractérisé en ce que** les rainures (40a, 40b ; 52a, 52b) présentent un chanfrein d'entrée (63a, 63b) permettant de faciliter l'insertion de la fourche (41 ; 50) sur la vertèbre (36, 37 ; 52) considérée.

9. Sonar selon l'une des revendications 2 à 8, **caractérisé en ce que** la fourche (50) est articulée par rapport au poisson (13) de façon à permettre une rotation de la fourche (50) autour d'un axe horizontal Y perpendiculaire à l'axe X.

10. Sonar selon la revendication 9, **caractérisé en ce que** la fourche (50) présente une forme s'incurvant perpendiculairement à l'axe Y.

11. Sonar selon la revendication 10, **caractérisé en ce que** la forme de la fourche (50) est incurvée de façon à ce qu'une partie concave (54) de la forme incurvée vienne en appui sur un premier flanc (55a, 55b) de la rainure (52a, 52b) correspondante et **en ce qu'**une extrémité libre (56a, 56b) de chacune des dents (50a, 50b) vient en appui contre un second flanc (57a, 57b) de la rainure correspondante, opposé au premier flanc (55a, 55b).

12. Sonar selon l'une des revendications 6 à 11, **caractérisé en ce que** la première et la seconde vertèbres (36, 37 ; 52) ainsi que les fourches (41, 50) sont percées de façon à permettre le passage d'un axe (42) permettant de verrouiller la position de la fourche (41, 50) sur la vertèbre correspondante (36, 37 ; 52).

13. Sonar selon la revendication 12, **caractérisé en ce qu'**il comprend une goupille (43) permettant d'empêcher le désengagement de l'axe (42) de verrouillage de la fourche (41, 50).

14. Sonar selon l'une des revendications précédentes, **caractérisé en ce que** le raccordement mécanique assure le positionnement du poisson (13) par rapport à la terminaison (18), son maintien en position et la reprise des efforts exercés par le poisson (13) sur la terminaison (18).

## Patentansprüche

1. Aktives, geschlepptes Sonar, beinhaltend eine in ein Tauchobjekt, genannt Fisch (13), integrierte Sendeantenne, eine Tauch-Empfangsantenne, genannt Flöte (14) und ein Schleppseil (12), welches dazu bestimmt ist, den Fisch (13) und die Flöte (14) zu schleppen, **dadurch gekennzeichnet, dass** das Schleppseil (12) einen mechanisch und elektrisch an die Flöte (14) angeschlossenen Endabschnitt (18) beinhaltet, dass der Endabschnitt (18) abnehmbare Mittel zum mechanischen und elektrischen Anschließen des Fischs (13) mit dem Schleppseil (12) beinhaltet, unabhängig vom Anschluss der Flöte (14), und dadurch, dass der Endabschnitt (18) mehrere Wirbel (30, 36, 37; 52) beinhaltet, welche untereinander in Reihe artikuliert sind, wobei die Wirbel (30, 36, 37; 52) eine im Wesentlichen zylindrische äußere Fläche besitzen, welche sich entlang einer Hauptachse X des Schleppseils (12) erstreckt, wenn das Schleppseil (12) gespannt ist.

2. Sonar nach Anspruch 1, **dadurch gekennzeichnet, dass** ein erster und ein zweiter der Wirbel (36, 37; 52) dazu bestimmt sind, jeweils mit einer Gabel (41; 50) des Fischs (13) zusammenzuarbeiten, um den mechanischen Anschluss des Fischs (13) an dem Endabschnitt (18) sicherzustellen.

3. Sonar nach Anspruch 2, **dadurch gekennzeichnet, dass** ein dritter der Wirbel (35) mindestens einen elektrischen Sockel (25) beinhaltet, welcher es ermöglicht, den Fisch (13) an das Schleppseil (12) anzuschließen, dadurch, dass der Fisch (13) einen Arm (22b) beinhaltet, welcher mit einer der Gabeln (41; 50) endet, dadurch, dass ein elektrisches Kabel (27), welches den elektrischen Anschluss des Fischs (13) ermöglicht, sich im Innern des Arms (22b) erstreckt, und dadurch, dass das elektrische Kabel (27) einen freien Abschnitt beinhaltet, welcher sich außerhalb des Arms (22b) erstreckt und mit einem Stecker (26) endet, welcher zum Anschließen an den Sockel (25) bestimmt ist.

4. Sonar nach Anspruch 3, **dadurch gekennzeichnet, dass** die Wirbel (30), genannt laufende Wirbel, welche zwischen dem ersten Wirbel (36; 52) und dem dritten Wirbel (35) befindlich sind, eine Nut (45) beinhalten, welche entlang der Achse X ausgerichtet ist und im Innern der äußeren zylindrischen Fläche der betrachteten laufenden Wirbel (30) geschaffen ist, und dadurch, dass die Nut (45) dazu bestimmt ist, den freien Abschnitt des elektrischen Kabels (27) zu fassen.

5. Sonar nach Anspruch 4, **dadurch gekennzeichnet, dass** er ein abnehmbares elektrisches Verlängerungskabel (47) beinhaltet, angeordnet zwischen dem Stecker (26), welcher das Ende des elektrischen Kabels (27) bildet, und dem Sockel (25) und dadurch, dass das elektrische Verlängerungskabel (47) im Innern der äußeren zylindrischen Fläche des dritten Wirbels (35) angeordnet ist.

6. Sonar nach einem der Ansprüche 2 bis 5, **dadurch gekennzeichnet, dass** die Gabel (41; 50) zwei Zähne (41a, 41b; 50a, 50b) beinhaltet, dadurch, dass der erste und der zweite Wirbel (36, 37; 52) Nuten (40a, 40b; 52a, 52b) beinhalten, wobei die Zähne (41a, 41b; 50a, 50b) sich jeweils in eine der Nuten (40a, 40b; 52a, 52b) einfügen können.

7. Sonar nach Anspruch 6, **dadurch gekennzeichnet, dass** die Nuten (40a, 40b; 52a, 52b) den betrachteten Wirbel (36, 37; 52) entlang einer vertikalen Achse Z durchqueren, welche rechtwinklig zur Achse X ist.

8. Sonar nach einem der Ansprüche 6 oder 7, **dadurch gekennzeichnet, dass** die Nuten (40a, 40b; 52a, 52b) eine Eingangsphase (63a, 63b) beinhalten, welche das Einfügen der Gabel (41; 50) auf dem betrachteten Wirbel (36, 37; 52) erleichtern.

9. Sonar nach einem der Ansprüche 2 bis 8, **dadurch gekennzeichnet, dass** die Gabel (50) in Bezug auf den Fisch (13) so artikuliert ist, dass eine Drehung der Gabel (50) um eine horizontale Achse Y ermöglicht wird, welche rechtwinklig zur Achse X ist.

10. Sonar nach Anspruch 9, **dadurch gekennzeichnet, dass** die Gabel (50) eine sich rechtwinklig zur Achse Y krümmende Form aufweist.

11. Sonar nach Anspruch 10, **dadurch gekennzeichnet, dass** die Form der Gabel (50) so gekrümmt ist, dass ein konkaver Abschnitt (54) der gekrümmten Form an einer ersten Flanke (55a, 55b) der entsprechenden Nut (52a, 52b) zum Anliegen kommt, und dadurch, dass ein freies Ende (56a, 56b) eines jeden der Zähne (50a, 50b) an einer zweiten Flanke (57a, 57b) der entsprechenden Nut zum Anliegen kommt, welche der ersten Flanke (55a, 55b) gegenüber liegt.

12. Sonar nach einem der Ansprüche 6 bis 11, **dadurch gekennzeichnet, dass** der erste und der zweite Wirbel (36, 37; 52) sowie die Gabeln (41, 50) durchbohrt sind, um das Passieren einer Achse (42) zu ermöglichen, welche die Verriegelung der Position der Gabel (41, 50) auf dem entsprechenden Wirbel (36, 37; 52) ermöglicht.

13. Sonar nach Anspruch 12, **dadurch gekennzeichnet, dass** es einen Splint (43) beinhaltet, welcher das Lösen der Verriegelungsachse (42) der Gabel (41, 50) aus dem Eingriff verhindert.

14. Sonar nach einem der Ansprüche, **dadurch gekennzeichnet, dass** der mechanische Anschluss die Positionierung des Fischs (13) in Bezug auf den Endabschnitt (18), seinen Halt in der Position und die Aufnahme der durch den Fisch (13) auf den Endabschnitt (18) ausgeübten Kräfte sicherstellt.

## Claims

1. An active towed sonar comprising an emission antenna integrated into a submersible object called a towfish (13), a submersible receive antenna called a streamer (14) and a tow cable (12) intended to tow the towfish (13) and the streamer (14), **characterized in that** the tow cable (12) comprises a termination (18) connected mechanically and electrically to the streamer (14), **in that** the termination (18) comprises means of removable mechanical and electrical connection of the towfish (13) to the tow cable (12), independently of the connection of the streamer (14) and **in that** the termination (18) comprises several vertebrae (30, 36, 37; 52) articulated to one another in series, the vertebrae (30, 36, 37; 52) having a substantially cylindrical exterior surface extending along a main axis X of the tow cable (12) when the tow cable (12) is taut.

2. The sonar according to claim 1, **characterized in that** a first and a second of the vertebrae (36, 37; 52) are intended each to collaborate with a fork (41; 50) of the towfish (13) so as to ensure the mechanical connection of the towfish (13) to the termination (18).

3. The sonar according to claim 2, **characterized in that** a third of the vertebrae (35) comprises at least one electrical fixed connector (25) allowing the towfish (13) to be connected to the tow cable (12), **in that** the towfish (13) comprises an arm (22b) terminating in one of the forks (41; 50), **in that** an electrical cable (27) allowing electrical connection of the towfish (13) extends inside the arm (22b) and **in that** the electrical cable (27) comprises a free portion extending outside the arm (22b) and ending in a plug (26) intended to be connected to the fixed connector (25).

4. The sonar according to claim 3, **characterized in that** the vertebrae (30) referred to as the running vertebrae situated between the first vertebra (36; 52) and the third vertebra (35) comprise a slot (45) oriented along the axis X and produced inside the cylindrical exterior surface of the running vertebrae (30) concerned and **in that** the slot (45) is intended to contain the free portion of the electrical cable (27).

5. The sonar according to claim 4, **characterized in that** it comprises a removable electrical extension (47) arranged between the plug (26) forming the end of the electrical cable (27) and the fixed connector (25) and **in that** the electrical extension (47) is arranged inside the cylindrical exterior surface of the third vertebra (35).

6. The sonar according to one of claims 2 to 5, **characterized in that** the fork (41; 50) comprises two tines (41a, 41b; 50a, 50b), **in that** the first and the second vertebra (36, 37; 52) comprise slots (40a, 40b; 52a, 52b), it being possible for the tines (41a, 41b; 50a, 50b) each to become inserted in one of the slots (40a, 40b; 52a, 52b).

7. The sonar according to claim 6, **characterized in that** the slots (40a, 40b; 52a, 52b) pass through the vertebra concerned (36, 37; 52) along a vertical axis Z perpendicular to the axis X.

8. The sonar according to one of claims 6 or 7, **characterized in that** the slots (40a, 40b; 52a, 52b) have an entry bevel (63a, 63b) making it easier to insert the fork (41; 50) in the vertebra (36, 37; 52) concerned.

9. The sonar according to one of claims 2 to 8, **characterized in that** the fork (50) is articulated with respect to the towfish (13) in such a way as to allow the fork (50) to rotate about a horizontal axis Y perpendicular to the axis X.

10. The sonar as claimed in claim 9, **characterized in that** the fork (50) has a shape that curves perpendicular to the axis Y.

11. The sonar as claimed in claim 10, **characterized in that** the shape of the fork (50) is curved such that a concave part (54) of the curved shape comes to bear against a first flank (55a, 55b) of the corresponding slot (52a, 52b) and **in that** a free end (56a, 56b) of each of the tines (50a, 50b) comes to bear against a second flank (57a, 57b) of the corresponding slot, opposite to the first flank (55a, 55b).

12. The sonar according to one of claims 6 to 11, **characterized in that** the first and second vertebrae (36, 37; 52) and the forks (41, 50) are pierced in such a way as to allow the passage of a rod (42) allowing the fork (41, 50) to be locked in position on the corresponding vertebra (36, 37; 52).

13. The sonar according to claim 12, **characterized in that** it comprises a pin (43) making it possible to prevent the disengagement of the rod (42) that locks the fork (41, 50).

14. The sonar accroding to one of the preceding claims, **characterized in that** the mechanical connection ensures the positioning of the towfish (13) with respect to the termination (18), keeps it in position and reacts the forces applied by the towfish (13) to the termination (18).
